# FASCICULE DE BREVET EUROPEEN

(11) **EP 0 348 289 B1**
(45) Date de publication et mention de la délivrance du brevet: **14.04.1993**
(21) Numéro de dépôt: 89401722.7
(22) Date de dépôt: 19.06.1989
(51) Int. Cl.: G01N 15/05, G01N 29/02, G01S 15/18

(54) **Dispositif de détection et de mesure par échographie de particules sédimentant dans un liquide.**
Vorrichtung zum Nachweis und zur Messung von in einer Flüssigkeit ausfallenden Teilchen mittels Echographie
Device for detecting and measuring particles precipitating in a liquid by the use of echography

(30) Priorité: 21.06.1988 FR 8808299
(43) Date de publication de la demande: 27.12.1989
(73) Titulaire: UNIVERSITE RENE DESCARTES, (PARIS V), F-75006 Paris (FR)
(72) Inventeur: Beuzard, Yves, F-75007 Paris (FR); Boynard, Michel, F-94100 Saint Maur (FR); Guillet, Roger, F-78340 Les Clayes sous Bois (FR); Razavian, Mahmoud, F-94320 Thiais (FR)
(74) Mandataire: Lhuillier, René

(56) Documents cités:
- US-A- 4 014 650
- J. ACOUST. SOC. AM., vol. 75, no. 4, avril 1984, pages 1265-1272, Acoustical Society of America; K.K. SHUNG et al.: "Effect of flow disturbance on ultrasonic backscatter from blood"
- MEDICAL & BIOLOGICAL ENGINEERING & COMPUTING, vol. 17, no. 5, septembre 1979, pages 619-622, IFMBE; D.J: HUGHES et al.: "Attenuation and speed of 10 MHz ultrasound in canine blood of various packed-cell volumes at 37 degrees C"
- IEEE - PROCEEDINGS OF THE 9TH ANNUAL CONFERENCE OF THE ENGINEERING IN MEDICINE AND BIOLOGY SOCIETY 13-16 novembre 1987, pages 688-689, IEEE, New York, US; M. BOYNARD et al.: "Evaluation of red blood cell aggregate size by ultrasonic backscattering"
- BIORHEOLOGY, vol. 24, 1987, pages 451-461, Pergamon Journals Ltd; M. BOYNARD et al.: "Aggregation of red blood cells studied by ultrasound backscattering"

## Description

L'invention qui se rapporte à un dispositif et un appareil d'analyse par échographie ultrasonore de particules sédimentant dans un liquide, consiste plus précisément en un dispositif dont le fonctionnement est basé sur l'interférence de deux ondes ultrasonores permettant de déterminer la taille des particules, leur vitesse de sédimentation et leur compactage une fois la sédimentation terminée.

Ce dispositif a été utilisé pour étudier des particules organiques (polystyrène,...) et des particules biologiques (globules rouges du sang) et notamment pour ce derniers leur état d'agrégation. Le dispositif et l'appareil décrits ci-dessus permettent d'étudier avantageusement les propriétés de particules (taille, densité, compactage, agrégation) ainsi que l'état du sédiment formé. Les propriétés rhéologiques du sang sont en grande parties gouvernées par celles des globules rouges du fait de leur concentration importante et elles dépendent de la déformabilité et de l'agrégabilité de ceux-ci. Il est par conséquent important en pratique hospitalière de déterminer avec précision l'état d'agrégation, voir d'agglutination de ces cellules. Pour évaluer l'agrégation des globules rouges entre eux, il est habituel de mesurer la vitesse de sédimentation du sang dans le plasma qui dépend de la densité des globules rouges et de celle du plasma, de la viscosité du plasma et de la taille des globules rouges ainsi que celle des agrégats. Une méthode classique consiste à mesurer la hauteur de la colonne de plasma surmontant l'interface plasma-sang à la première et à la deuxième heure de sédimentation. On peut aussi à partir d'une courbe de sédimentation obtenue en fonction du temps déterminer la vitesse de sédimentation maximum des hématies par la mesure de la plus grande pente de la tangente à la courbe de sédimentation.

Des méthodes ultrasonores peuvent également être utilisées. Elles sont basées sur les interactions, notamment la diffusion des ondes ultrasonores avec la matière. On sait en effet qu'un faisceau ultrasonore qui se propage dans un milieu voit son intensité diminuer en fonction de la distance parcourue. Cette atténuation d'intensité du faisceau ultrasonore provient soit de la réflexion qui se produit à la surface d'éléments constituant le milieu et dont la dimension est supérieure à la longueur d'onde ultrasonore, soit de la diffusion dudit faisceau qui se produit lorsque la taille des particules en suspension dans le milieu est inférieure ou égale à la longueur d'onde de l'onde ultrasonore utilisée, soit de l'absorption ultrasonore qui dépend de l'épaisseur et de la nature du milieu traversé. L'interaction des ondes ultrasonores avec le sang aux fréquences habituellement utilisées en diagnostic médical donne toujours naissance à des ondes diffusées. L'analyse de l'amplitude et de la fréquence des ondes diffusées renseigne sur la taille, la nature et le mouvement de cet obstacle. Des expériences analysant l'amplitude des ondes ultrasonores ont été faites dans ce sens, et on a pû mesurer les variations du coefficient de rétrodiffusion ultrasonore de suspensions sanguines en fonction de la vitesse de sédimentation des hématies et on a pû mettre en évidence une différence entre des globules rouges non agrégés, et des globules agrégés.

L'objet de la présente invention consiste en un dispositif pour la détection et l'analyse de particules sédimentant dans un liquide basé sur l'interférence d'ondes ultrasonores émises en direction de la suspension et comportant des moyens de détection et d'analyse des ondes réfléchies par lesdites suspensions au contact d'une surface solide, caractérisé en ce qu'il comporte une cellule de mesure (1) ayant la forme d'un barreau vertical intégré dans une enceinte thermostatée (12) et qui comporte deux cavités (10) séparées d'une plaquette horizontale (11) de faible épaisseur, une des cavités étant destinée à recevoir la suspension (13) de particules tandis qu'une sonde ultrasonore émettrice-réceptrice (2) est localisée dans l'autre cavité, à distance de ladite plaquette et en ce qu'il comporte également un échographe mode A (3) assurant la génération d'impulsions électriques de période de répétition variable qui excitent la sonde, et assurant aussi la détection et la transformation en signal électrique, un système d'acquisition dudit signal pour introduire un retard programmable par rapport à l'émission de la sonde, un moyen pour échantillonner ledit signal dans une tranche de temps déterminée, et un moyen pour reconstruire numériquement l'écho provenant de cette tranche et fournir à un écran les courbes représentatives.

La sonde est positionnée de telle façon que le champ ultrasonore soit perpendiculaire à la plaquette et elle est maintenue par un bouchon étanche qui est muni d'un petit conduit obturable. La cavité de la sonde contient du liquide entre la plaquette et la sonde La sonde est en matériau pouvant émettre des ultrasons et sa fréquence de travail est fonction des particules à étudier.

Selon d'autres caractéristiques de l'invention le module de détection de l'échographe est constitué d'un amplificateur formé d'un circuit intégré, d'un redresseur qui fonctionne sur le principe du redressement double-alternance avec diodes prépolarisées et d'un filtre analogique. Il est également possible d'effectuer une analyse fréquentielle du signal non redressé.

D'autre part un module d'acquisition du signal permettant d'introduire un retard programmable par rapport à l'émission de la sonde comprend un échantillonneur bloqueur et un convertisseur analogique-numérique, une fenêtre temporelle permettant d'échantillonner le signal électronique dans une tranche de temps également programmable.Ainsi on peut positionner la fenêtre temporelle sur l'écho généré par l'interface entre la plaquette et la suspension avant qu'un circuit électronique échantillonne le signal électrique continu dans la fenêtre à l'aide d'un retard de pas réglable. On notera qu'un moyen est prévu pour échantillonner de façon stroboscopique le signal réfléchi.

D'autres caractéristiques et avantages de l'invention apparaîtront à la lecture de la description qui va suivre d'une forme de réalisation qui doit être considérée à titre d'exemple et qui fait référence aux dessins annexés qui représentent :
figure 1 le schéma synoptique du dispositif de l'invention ;
figure 2 une vue schématique de la cellule de mesure;
figure 3 une courbe illustrant l'acquisition stroboscopique dans une tranche de temps déterminée.
figure 4 une courbe montrant la variation d'amplitude d'un signal obtenu en fonction du temps de sédimentation d'une suspension de particules selon l'exemple I.
figure 5 une courbe montrant en représentation tridimensionnelle les variations d'amplitude de la valeur maximum du signal mesuré en fonction du temps de sédimentation et du temps mis par l'onde ultrasonore pour parcourir la distance aller et retour entre la sonde et les interfaces,
figure 6 une courbe analogue à celle de la figure 4 selon l'exemple II,
figure 7 une courbe de variation du temps en fonction du volume globulaire moyen selon l'exemple II,
figures 8 à 10 des courbes analogues à celle de la figure 4 selon l'exemple III,
figure 11 une courbe montrant l'agrégation de globules rouges en fonction de la température.

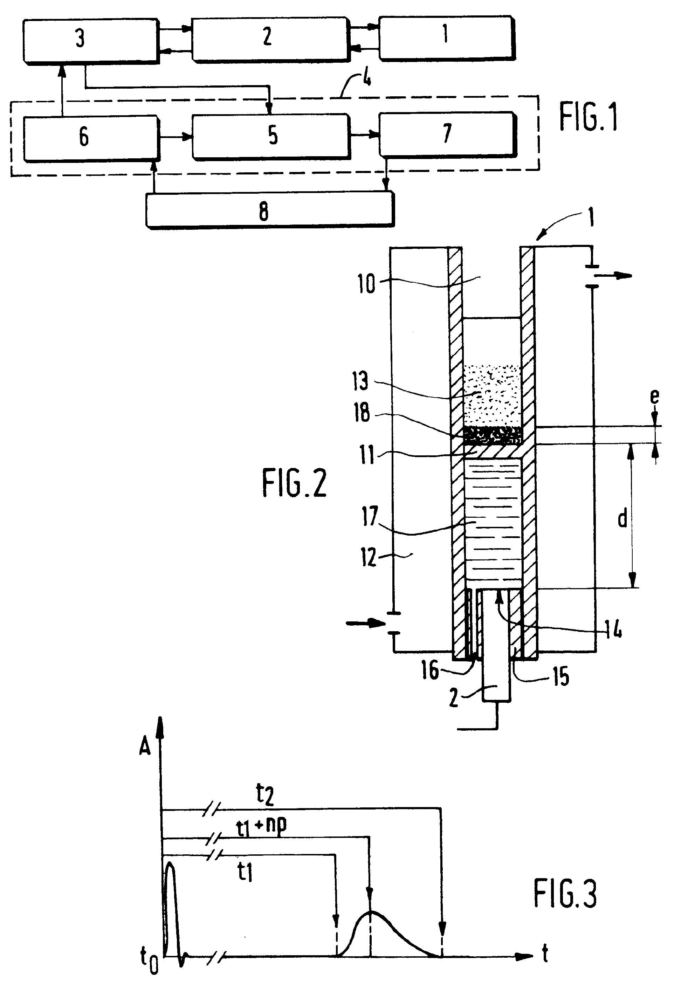

Sur le schéma synoptique de la figure 1 est illustré le dispositif qui met en oeuvre une cellule de mesure thermostatée 1, une sonde ultrasonore émettrice-réceptrice 2, un échographe mode A 3, un module d'acquisition de signal 4 comprenant un échantillonneur bloqueur 5 fonctionnant avec un retard programmable 6 par rapport à l'émission, et un convertisseur analogique numérique 7. Un microordinateur 8 effectue les calculs et permet de présenter les résultats.

La cellule de mesure 1 représentée à la figure 2 se présente comme un barreau vertical creusé sur toute sa hauteur d'une cavité cylindrique 10 intégrée dans une enceinte thermostatée 12 maintenant sa température à la température désirée. La cavité est séparée en deux par une plaquette 11 de faible épaisseur positionnée perpendiculairement à l'axe du cylindre. La chambre supérieure au dessus de la plaquette 11 est destinée à recevoir une suspension 13 de particules. A la base de la chambre inférieure située sous la plaquette est montée la sonde ultrasonore 2 dont il sera question plus loin. La face supérieure 14 de ladite sonde est écartée de la face supérieure de la plaquette d'une distance d égale à la limite des champs ultrasonores proche et lointain. La sonde 2 est positionnée dans la cavité par un bouchon étanche 15 qui ferme ladite cavité. Ce bouchon dispose d'un petit conduit 16 obturable grâce auquel un volume de liquide 17 peut être amené à remplir la cavité entre la plaquette et la sonde, et joue le rôle de joint acoustique. L'interversion de la position des cavités destinées à recevoir respectivement la suspension et la sonde est possible.

Avant de préciser la nature et la fonction des éléments illustrés à la figure 1, on donne ci-après une indication succinte du mode de fonctionnement d'un appareil mettant en oeuvre la cellule de mesure précédemment décrite.

Un générateur d'impulsion électrique travaillant à une fréquence de récurrence déterminée excite un matériau pouvant émettre des ultrasons à l'aide de la sonde 2. A chaque excitation du générateur, la sonde émet une impulsion ultrasonore d'une durée déterminée, correspondant par exemple à quelques périodes, qui se propage dans le liquide 17, en direction de la plaquette 11 et de la suspension 13. Au cours de son parcours elle perd une partie de son énergie par absorption et une autre partie par réflexion au niveau des deux faces de ladite plaquette 11. La partie d'onde ultrasonore réfléchie par la plaquette est recueillie par la sonde 2 qui est aussi réceptrice, qui la transforme en un signal électrique qui dépend du temps aller et retour que met l'onde ultrasonore pour parcourir la distance sonde-plaquette. Ce signal doit bien évidemment être visualisé sur l'écran d'un oscilloscope. On verra plus loin de quelle façon l'introduction d'un retard programmable, par rapport à l'excitation de la sonde permet la mesure de l'amplitude des échos perçus. Il est par ailleurs possible d'effectuer une analyse fréquentielle.

Parmi les éléments définis en relation avec la figure 1, la sonde 2 constitue un organe essentiel de la cellule de mesure 1. Cette sonde ultrasonore 2 est formée d'un matériau pouvant émettre des ultrasons de fréquence centrale pouvant varier de 1 à 50 MHz (par exemple 8 MHz) et qui travaille en émission-réception. Le choix de la fréquence de travail est déterminé en fonction de la mesure envisagée.

L'échographe 3 est constitué d'un générateur d'impulsions électriques de période de répétition variable qui excite la sonde 2, d'un module de détection redressant et filtrant le signal électrique provenant de la sonde et d'un oscilloscope permettant de visualiser les échos. On utilise un générateur d'impulsions électriques à décharge capacitive, dont la fréquence de répétition des impulsions est réglable. A l'aide d'un amortisseur électrique ou en modifiant la valeur de la capacité de charge, on peut faire varier l'amplitude et la durée de l'impulsion. Le module de détection de l'échographe 3 est constitué d'un amplificateur formé d'un circuit intégré, d'un redresseur qui fonctionne sur le principe du redressement double alternance avec diodes prépolarisées et d'un filtre analogique.

Le module d'acquisition du signal 4 comprend un échantillonneur bloqueur 5 fonctionnant avec un retard programmable 6 par rapport à l'émission et un convertisseur analogique-numérique. Une fenêtre temporelle permet d'échantillonner le signal électrique dans une tranche de temps (t1, t2) également programmable. On peut ainsi analyser le signal sonore provenant d'une tranche d'épaisseure telle qu'une couche sédimentée 18 obtenue au dessus de la plaquette 11. Les temps t1 et t2 sont déterminés de telle façon que la fenêtre temporelle inclue l'écho provenant de l'interface plaquette-couche sédimentée.

L'échantillonneur 5 est commandé avec un retard variable. Il prélève à la suite de chaque impulsion la valeur de l'amplitude du signal électrique provenant de l'interface plaquette-couche sédimentée située à la distance 2d. Le signal électrique redressé représente l'onde réfléchie provenant de l'interface entre la plaquette 11 et la suspension 13. Un convertisseur 7 est utilisé pour mémoriser l'amplitude du signal échantillonné, qui est ensuite stocké dans la mémoire du micro-ordinateur 8, ce qui permet de reconstruire numériquement le signal analogique.

Une fois la fenêtre temporelle positionnée sur l'écho généré par l'interface entre la plaquette 11 et la suspension 13, un circuit électronique échantillonne le signal électrique contenu dans la fenêtre, à l'aide d'un retard réglable de pas p. La figure 3 illustre le principe d'une acquisition stroboscopique des signaux réfléchis dans une tranche de temps de t1 à t2. On a représenté en abscisses le temps t et en ordonnées l'amplitude A du signal. Au temps to un pic représente l'émission d'une onde ultrasonore. La première acquisition illustrée par l'apparition d'un début de signal réfléchi se produit au temps t1. L'acquisition suivante est effectuée à l'instant t1 + p après l'émission suivante et ainsi de suite. D'une façon générale la nième acquisition est effectuée à l'instant tn après la nième émission avec tn = t1 + np et t1 < tn < t2. L'échantillonnage du signal réfléchi est effectué à l'aide d'un certain nombre d'acquisitions. Une fois échantillonnée, l'amplitude du signal est numérisée à l'aide du convertisseur et est mise en mémoire dans le micro-ordinateur. L'ensemble des points échantillonnés appartenant à la fenêtre est ainsi mémorisé et permet alors de reconstruire numériquement le signal analogique.

Un des registres de micro-ordinateur est utilisé comme une horloge générale et déclenche le générateur d'impulsion qui lui-même sert à chaque cycle trois impulsions, une impulsion de retard pour faire varier la position de l'échantillonneur, une impulsion d'échantillonnage pour prélever l'amplitude de l'écho puis une impulsion de conversion pour commander le convertisseur.

Un logiciel spécifique a été prévu pour synchroniser le fonctionnement de l'échographe, choisir le positionnement et la durée de la fenêtre d'échantillonnage, le stockage et l'édition des résultats.

Avec la cellule de mesure 1 et le dispositif précédemment décrit, on peut suivre les variations de l'amplitude des échos provenant des interfaces plaquette 11 - couche sédimentée 18 et couche sédimentée - suspension 13, du fait que l'impédance acoustique d'une couche sédimentée est différente de celle de la plaquette et de celle de la suspension, et que chaque discontinuité d'impédance acoustique provoque un écho.

Lorsque les deux interfaces, plaquette 11 - couche sédimentée 18 et couche sédimentée - suspension 13, sont suffisamment proches l'une de l'autre les ondes ultrasonores réfléchies par celles-ci entrent en interférence et l'amplitude de l'onde résultante permet de mettre en évidence des couches de particules sédimentées d'épaisseur très inférieure à la longueur d'onde de l'onde ultrasonore et par conséquent d'étudier en fonction du temps l'accumulation de telles particules sur la plaquette.

On peut en déduire par exemple la vitesse avec laquelle les particules s'accumulent sur la plaquette et donc sédimentent dans une suspension et en tirer des renseignements sur les propriétés du sédiment et éventuellement sur l'état d'agrégation des particules. Le dispositif et l'appareil selon l'invention trouve des applications intéressantes dans l'étude du sang normal et pathologique, mais l'invention ne se limite pas à ce domaine préférentiel d'utilisation. Elle englobe aussi toutes les applications où l'on recherche des précisions sur les propriétés de particules solides dans une suspension, (taille, densité, compactage, agrégation).

### EXEMPLES DE RESULTATS

### I - Suspensions de particules

Une suspension de particules de copolymère-styrène-divinyl-benzène (Mitsubischi Chemical Industries) a été préparée par suspension de ces particules dans du tampon PBS (phosphate de Na 10 mM ; NaCl 0,15 M ; pH = 7,4 ; osmolalité = 300 mosm/kg ; densité = 1,005) à la concentration volumique de 1%.

### A. Exemple de courbe obtenue

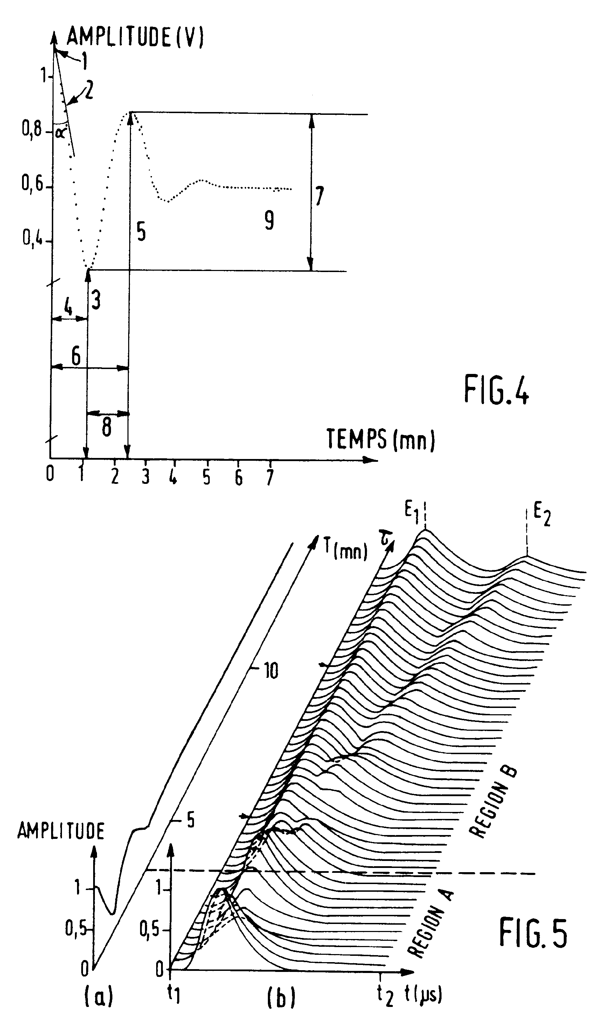

La figure 4 présente la variation du signal obtenu avec le dispositif décrit ci-dessus en fonction du temps de sédimentation pour une suspension de particules de diamètre 15,5 m et de densité 1,312. Les paramètres expérimentaux que l'on peut déduire de cette courbe sont :
1. Amplitude initiale, Ao ;
2. Pente initiale,α ;
3. Amplitude du premier minimum, Am ;
4. Temps d'apparition du premier minimum, tm ;
5. Amplitude du premier maximum, AM ;
6. Temps d'apparition du premier maximum, tM ;
7. Amplitude crête-crête, Acc = AM - Am ;
8 Temps crête-crête, tcc = tM - tm ;
9. Amplitude finale, AF.

### B. Comparaison de deux types de particules.

Le tableau 1 donne les résultats obtenus à partir de deux types de particules de diamètre respectivement 7,0 m et 15,5 m.

### C. Représentation tri-dimensionnelle du signal.

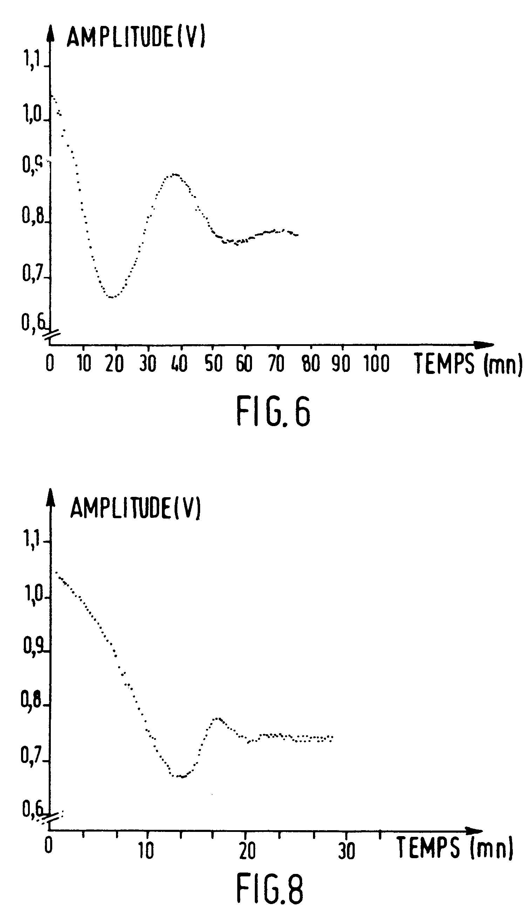

La figure 5 présente les variations du signal à la fois en fonction du temps de vol t (temps que met l'impulsion ultrasonore pour parcourir la distance aller-retour entre la sonde et les interfaces) et du temps de sédimentation T pour une suspension de particules de diamètre 7,0 m à la concentration volumique de 5 %. La courbe a représenté l'évolution, en fonction du temps de sédimentation, de la valeur maximum du signal mesuré dans la fenêtre temporelle t1, t2 représenté en b. On distingue parfaitement deux régions A et B. Dans la région A, les oscillations du signal représentent le résultat des interférences entre les ondes ultrasonores réfléchies respectivement par les interfaces plaquette-sédiment I1 et sédiment-suspension I2. La région B montre que l'écho E2 s'éloigne progressivement de l'écho E1 ce qui signifie que l'interface I2 s'éloigne progressivement de l'interface I1.

### II - Exemple de particules biologiques : suspension de globules rouges non agrégés.

Après avoir lavé des globules rouges normaux dans du tampon PBS, le culot obtenu après centrifugation est resuspendu dans le même tampon à l'hématrocrite désiré.

### A. Exemple de courbe obtenue.

La figure 6 présente la variation du signal en fonction du temps de sédimentation pour une suspension de globules rouges à l'hématocrite de 2 %. La courbe obtenue a la même allure que celle déjà présentée pour les suspensions de particules. On peut définir, sur cette courbe, les mêmes paramètres 1, 2, 3..., 9.

### B. Exemple de résultats obtenus sur des globules rouges pathologiques.

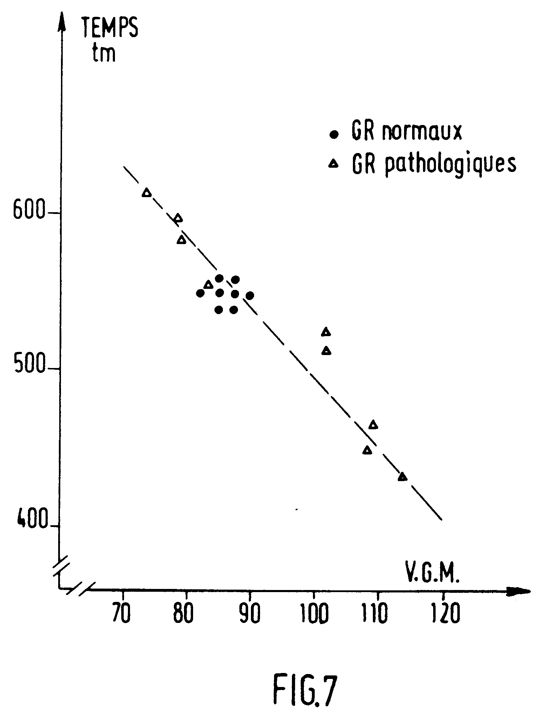

La figure 7 présente la variation du temps du premier minimum tm en fonction du volume globulaire moyen VGM pour des globules normaux et pathologiques.

### III - Exemple d'agrégation de particules : suspensions de globules rouges agrégés.

### A. Exemple de courbe obtenue.

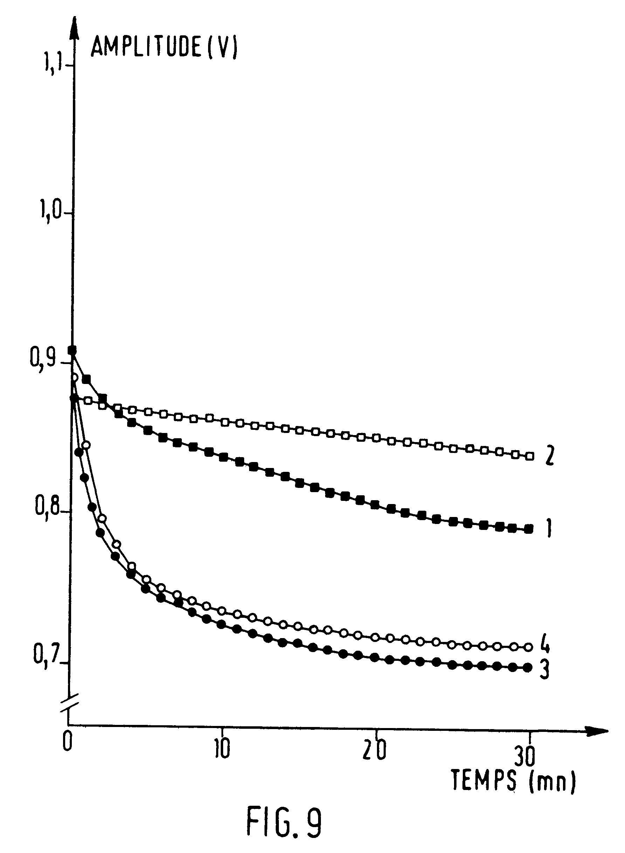

Une suspension de globules rouges agrégés a été préparée en resuspendant une fraction du culot de globules obtenus après centrifugation dans leur propre plasma à l'hématocrite de 2 %. La figure 8 représente la variation du signal obtenu en fonction du temps de sédimentation.

### B. Comparaison des résultats obtenus sur des suspensions de globules rouges agrégés et de globules rouges non agrégés.

Le tableau 2 présente la comparaison des différents paramètres obtenus à partir d'une suspension de globules rouges agrégés et d'une suspension des mêmes globules non agrégés.

### C. Exemple de globules rouges pathologiques

La figure 9 présente les variations du signal en fonction du temps de sédimentation dans le cas d'une suspension de globules rouges drépanocytaires à l'hématocrite de 25 % pour différentes pressions partielles en oxygène. La courbe 1 a été obtenue directement sur du sang drépanocytaire veineux dont la pression partielle en oxygène (pO2) est de 40 mm Hg. La courbe 2 a été obtenue sur le même sang drépanocytaire mais oxygéné (pO₂ 150 mm Hg). La courbe 3 a été obtenue sur le même sang drépanocytaire mais déoxygéné (pO₂ 0 mm Hg). La courbe 4 obtenue dans le cas d'un sang normal (oxygéné ou déoxygéné) est présentée en comparaison. On voit parfaitement bien sur cette figure que le comportement du sang drépanocytaire est très particulier selon la pO₂.

### D. Exemple d'agrégation de globules rouges en présence de plasma normal ou pathologique.

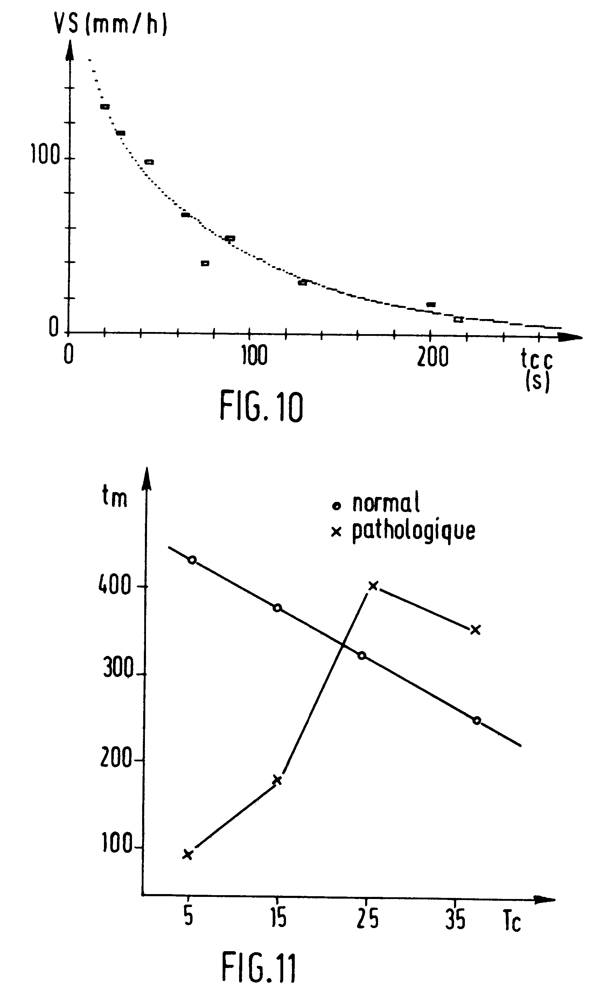

Des suspensions de globules rouges ont été préparées à l'hématocrite de 8 % en mélangeant ceux-ci dans 36 % de plasma, normal ou pathologique, et 56% de tampon PBS. La figure 10 présente les variations du temps tm en fonction de la vitesse de sédimentation mesurée par la méthode de Westergren. La différence de comportement entre ces deux sangs provient de la présence anormale de protéines en quantité anormale dans le sang pathologique.

### E. Exemple d'agglutination de globules rouges.

Les méthodes transfusionnelles d'analyse des groupes sanguins et les méthodes immuno-hématologiques reposent sur les études de l'agglutination des globules rouges par des anticorps. Un exemple d'agglutination par une agglutinine froide, pathologique, est comparé à l'agrégation de globules rouges d'un sang normal dans la figure 11 ou tm est représenté en fonction de la température.

## Revendications

1. Dispositif pour la détection et l'analyse de particules sédimentant dans un liquide basé sur l'interférence d'ondes ultrasonores émises en direction de la suspension et comportant des moyens de détection et d'analyse des ondes réfléchies par lesdites suspensions au contact d'une surface solide, caractérisé en ce qu'il comporte une cellule de mesure (1) ayant la forme d'un barreau vertical intégré dans une enceinte thermostatée (12) et qui comporte deux cavités (10) séparées d'une plaquettte horizontale (11) de faible épaisseur, une des cavités étant destinée à recevoir la suspension (13) de particules tandis qu'une sonde ultrasonore émettrice-réceptrice (2) est localisée dans l'autre cavité, à distance de ladite plaquette et en ce qu'il comporte également un échographe mode A (3) assurant la génération d'impulsions électriques de période de répétition variable qui excitent la sonde, et assurant aussi la détection et la transformation en signal électrique, un système d'acquisition dudit signal pour introduire un retard programmable par rapport à l'émission de la sonde, un moyen pour échantillonner ledit signal dans une tranche de temps déterminée, et un moyen pour reconstruire numériquement l'écho provenant de cette tranche et fournir à un écran les courbes représentatives.

2. Dispositif selon la revendication 1, caractérisé en ce que la sonde (2) est positionnée dans la cavité (10) par un bouchon étanche (15) qui ferme ladite cavité et qui est muni d'un petit conduit obturable (16), et en ce qu'un volume de liquide (17) remplit la cavité, entre la plaquette (11) et la sonde.

3. Dispositif selon la revendication 1, caractérisé en ce que la sonde ultrasonore est un matériau pouvant émettre des ultrasons dont la fréquence de travail a été déterminée en fonction de la mesure envisagée.

4. Dispositif selon la revendication 1, caractérisé en ce que le module de détection de l'échographe (3) est constitué d'un amplificateur formé d'un circuit intégré, avec redresseur d'un filtre analogique ou sans redresseur pour une analyse fréquentielle.

5. Dispositif selon la revendication 1, caractérisé en ce qu'un module d'acquisition du signal (4) permettant d'introduire un retard programmable (6) par rapport à l'émission de la sonde comprend un échantillonneur bloqueur (5) et un convertisseur analogique-numérique, une fenêtre temporelle permettant d'échantillonner le signal électrique dans une tranche de temps (t1, t2) également programmable.

6. Dispositif selon les revendications 1 et 5, caractérisé en ce qu'on positionne la fenêtre temporelle sur l'écho généré par l'interface entre la plaquette (11) et la suspension (13) avant qu'un circuit électronique échantillonne le signal électrique contenu dans la fenêtre à l'aide d'un retard réglable de pas (p).

7. Dispositif selon les revendications 1 et 6, caractérisé en ce que le moyen pour échantillonner le signal réfléchi consiste à effectuer à partir d'une impulsion émise, une succession d'acquisitions du signal réfléchi à partir d'un instant (t1), chaque acquisition étant augmentée du retard de pas (p) par rapport à la précédente.

8. Dispositif selon l'une quelconque des revendications 5 à 7, caractérisé en ce que l'amplitude du signal est numérisée à l'aide du convertisseur et mise en mémoire dans un micro-ordinateur, l'ensemble des points échantillonnés appartenant à la fenêtre étant mémorisé et permettant de reconstruire numériquement le signal analogique.

## Patentansprüche

1. Vorrichtung zum Erfassen und Analysieren von aus einer Flüssigkeit ausgefällten Partikeln mittels Interferenz von Ultraschallwellen, die in Suspensionsrichtung ausgesendet werden, wobei Mittel vorgesehen sind, die die in den Suspensionen an der Kontaktstelle mit einer festen Oberfläche reflektierten Wellen erfassen und analysieren, dadurch gekennzeichnet, daß eine Meßzelle (1) in Art einer vertikalen Röhre in eine thermostatische Umhüllung (12) eingebaut ist, daß die Röhre mit einer horizontalen Platte (11) von geringer Dicke in zwei Kammern (10) unterteilt ist, daß eine der Kammern der Aufnahme der Partikelsuspension (13) dient und in der anderen Kammer mit Abstand zur Platte eine Ultraschall-Sende- und Empfangssonde (2) untergebracht ist, daß ein Echographenmodul A (3) elektrische Impulse mit variabler Wiederholungsperiode zur Erregung der Sonde erzeugt und darüber hinaus auch der Erfassung und der Umwandlung in ein elektrisches Signal dient, daß ein Signalverarbeitungskreis das Signal mit einer bezüglich der Sondenaussendung programmierbaren Verzögerung versieht und daß ein der Eichung und Messung dienender Kreis das Signal in einem bestimmten Zeitbereich aufnimmt, und daß Mittel vorgesehen sind, um das aus diesem Zeitfenster kommende Echosignal wieder numerisch zu machen und auf einem Bildschirm als Kurve darzustellen.

2. Vorrichtung nach Anspruch 1, dadurch gekennzeichnet, daß die Sonde (2) in der Kammer (10) mittels eines Abdichtungsstopfens (15) gelagert ist, der die Kammer abschließt und einen kleinen absperrbaren Kanal (16) enthält, und daß die Kammer zwischen der Platte (11) und der Sonde mit einem Flüssigkeitsvolumen (17) angefüllt ist

3. Vorrichtung nach Anspruch 1, dadurch gekennzeichnet, daß die Ultraschallsonde aus einem Material besteht, das Ultraschallwellen mit einer Arbeitsfrequenz aussenden kann, die sich als Funktion der Meßaufgabe bestimmen läßt.

4. Vorrichtung nach Anspruch 1, dadurch gekennzeichnet, daß der Detektormodul des Echographen (3) einen Verstärker in IC-Bauweise aufweist mit Gleichrichtung durch Analogfilter oder ohne Gleichrichtung für eine Frequenzanalyse.

5. Vorrichtung nach Anspruch 1, dadurch gekennzeichnet, daß der Empfangsmodul für das Signal (4) zur Einführung einer bezüglich der Sendezeiten der Sonde programmierbaren Verzögerung einen Fensterdurchlaß- und -sperrkreis (5) und einen Analog-Digital-Wandler aufweist, wobei ein Zeitfenster die Möglichkeit gibt, das elektrische Signal innerhalb eines ebenfalls programmierbaren Zeitbereiches (t1, t2) aufzunehmen und zu messen.

6. Vorrichtung nach Anspruch 1 und 5, dadurch gekennzeichnet, daß das Zeitfenster auf das Echosignal eingestellt wird, welches an der Grenzschicht zwischen Platte (11) und Suspension (13) erzeugt wird, bevor ein elektrischer Schaltkreis mit Hilfe eines schrittweise arbeitenden Verzögerungsgliedes das im Fenster vorhandene elektrische Signal aufnimmt.

7. Vorrichtung nach Anspruch 1 und 6, dadurch gekennzeichnet, daß für das Herausgreifen und Messen des reflektierten Signals nach einem ausgesendeten Impuls zu einem bestimmten Zeitpunkt (t1) eine Folge von Reflexionssignalerfassungen vorgesehen wird, wobei jede Aufnahmebereitschaftszeit durch das Verzögerungsglied um einen Schritt (p) gegenüber dem vorangegangenen Aufnahmezeitpunkt vergrößert wird.

8. Vorrichtung nach einem der Ansprüche 5 bis 7, dadurch gekennzeichnet, daß die Signalamplitude mit einem Wandler digitalisiert wird und dann in den Speicher eines Mikroordinators gelangt, wobei dann die Gesamtheit gespeicherten am Fenster erfaßten Meßpunkte eine numerische Rekonstruktion des analogen Signals ermöglicht.

## Claims

1. Device for detecting and analysing particles settling in a liquid, based on the interference of ultrasonic waves emitted towards the suspension, and comprising means for detecting and analysing the waves reflected by the said suspensions on contact with a solid surface, characterised in that it comprises a measuring cell (1) having the form of a vertical bar integrated in a thermostatically controlled enclosure (12) and comprising two cavities (10) separated by a thin horizontal plate (11), one of the cavities being designed to receive the suspension (13) of particles whereas a transmitting and receiving ultrasonic probe (2) is located in the other cavity, at a distance from the said plate, and that it also comprises an A mode echograph (3) providing the generation of electric pulses having a variable repetition period which excite the probe, and further providing detection and conversion into an electrical signal, a system for the acquisition of the said signal in order to introduce a programmable delay in relation to transmission by the probe, a means for sampling the said signal in a given time slot, and a means for digitally reconstituting the echo from this slot and supplying a screen with the representative curves.

2. Device according to claim 1, characterised in that the probe (2) is positioned in the cavity (10) by a tight plug (15) which closes the said cavity and which is provided with a small closable conduit (16), and that a volume of liquid (17) fills the cavity, between the plate (11) and the probe.

3. Device according to claim 1, characterised in that the ultrasonic probe is a material capable of emitting ultrasounds the operating frequency of which has been determined as a function of the measurement contemplated.

4. Device according to claim 1, characterised in that the detection module of the echograph (3) is constituted by an amplifier formed by an integrated circuit, with a rectifier of an analogue filter or without a rectifier for frequency analysis.

5. Device according to claim 1, characterised in that a module for acquiring the signal (4) making it possible to introduce a programmable delay (6) in relation to transmission by the probe includes a sample and hold device (5) and an analogue-digital converter, a time window making it possible to sample the electrical signal in a time slot (t1, t2), likewise programmable.

6. Device according to claims 1 and 5, characterised in that the time window is positioned on the echo generated by the interface between the plate (11) and the suspension (13) before an electronic circuit samples the electrical signal contained in the window with the help of an adjustable delay with a step (p).

7. Device according to claims 1 and 6, characterised in that the means for sampling the reflected signal consists in effecting, on the basis of a pulse emitted, a succession of acquisitions of the reflected signal starting from a time (t1), each acquisition being incremented by the step delay (p) in relation to the preceding one.

8. Device according to any of claims 5 to 7, characterised in that the amplitude of the signal is digitised with the help of the converter and stored in a microcomputer, all of the points sampled belonging to the window being stored and making it possible to reconstitute the analogue signal digitally.
